# EUROPÄISCHE PATENTSCHRIFT

(11) **EP 1 152 236 B1**
(45) Veröffentlichungstag und Bekanntmachung des Hinweises auf die Patenterteilung: **31.08.2005**
(21) Anmeldenummer: 01109785.4
(22) Anmeldetag: 20.04.2001
(51) Int. Cl.: G01N 21/21, G01B 11/06

(54) **Optische Messanordnung mit einem Ellipsometer**
Optical measuring device with an ellipsometer
Dispositif de mesure optique avec un ellipsomètre

(30) Priorität: 02.05.2000 DE 10021378
(43) Veröffentlichungstag der Anmeldung: 07.11.2001
(73) Patentinhaber: Leica Microsystems Jena GmbH, 07745 Jena (DE)
(72) Erfinder: Mikkelsen, Hakon, Dr., 99441 Magdala (DE); Engel, Horst, Dr., 35394 Giessen (DE); Danner, Lambert, 35584 Wetzlar-Naunheim (DE); Stey, Christof, 35578 Wetzlar (DE)
(74) Vertreter: Reichert, Werner Franz

(56) Entgegenhaltungen:
- EP-A- 1 114 979
- US-A- 5 042 951
- US-A- 5 608 526
- US-A- 5 917 594

## Beschreibung

Die Erfindung bezieht sich auf eine optische Meßanordnung mit einem Ellipsometer, bei dem ein Einfallstrahl polarisierten Lichtes unter einem Einfallswinkel von α ≠ 0° auf einen Meßort an der Oberfläche einer Probe gerichtet ist und aus der Analyse eines von der Probe reflektierten Ausfallstrahls Informationen über Eigenschaften der Probe, bevorzugt über Schichtdicken, optische Materialeigenschaften wie Brechungsindex n, Extinktionskoeffizient k und ähnlich gewonnen werden.

Optische Meßanordnungen, die auf dem Prinzip der Ellipsometrie oder der Spektralphotometrie beruhen, sowie deren Verwendung zur Schichtdickenmessung sind aus dem Stand der Technik in vielfältiger Art und Weise bekannt. Ihr Einsatz hat sich insbesondere bei der Messung dünner Schichten an den Strukturen von Waferoberflächen bewährt. Während bei der Ellipsometrie ein schräger Einfall des Meßlichtes auf die Probe benötigt wird, ist bei der Spektralphotometrie ein senkrechter Lichteinfall zu bevorzugen, um Polarisationseffekte möglichst auszuschließen. Eine nach dem Prinzip der Spektralphotometrie arbeitende Meßanordnung ist beispielsweise aus der US 5 120 966 A bekannt.

Da insbesondere bei der Waferherstellung immer feinere Strukturen und dünnere Schichten angestrebt werden, steigen die Anforderungen an die Genauigkeit der optischen Meßanordnungen, mit denen die Maßhaltigkeit der Strukturen und Schichten nachgewiesen werden kann.

Um auch komplizierte Strukturen und Schichtsysteme vermessen zu können, müssen für eine zuverlässige Aussage zumeist mehrere Meßprinzipien angewandt werden, wobei die Meßvorgänge möglichst schnell hintereinander an einem gemeinsamen Ort erfolgen sollen, da die Positionierung angesichts von Meßortgrößen mit einer Weite im Mikrometerbereich sehr aufwendig ist. In US 5917594 wird der Oberbegriff des unabhängigen Anspruchs offenbart.

Bisherige Meßanordnungen erfordern für unterschiedliche Meßprinzipien auch verschiedene optische Baugruppen. Die Anordnung und Abstimmung der Baugruppen zueinander muß derart erfolgen, daß sich die zugehörigen Strahlengänge nach Möglichkeit nicht wesentlich beeinflussen. Bei einer Meßanordnung zur Inspektion von Waferoberflächen ist beispielsweise ein Meßobjektiv eines Spektralphotometers über dem Meßort anzuordnen. Weiterhin ist es erforderlich, den Laserstrahl einer Fokussiervorrichtung an den Meßort zu führen, um den zu untersuchenden Bereich einer Probe korrekt zu dem Meßobjektiv zu positionieren. Ein zusätzliches Ellipsometer ist dann seitlich des Meßobjektives des Spektralfotometers anzuordnen, wobei die Einfallstrahlen des Ellipsometers ebenfalls auf den Meßort auftreffen müssen. Eine entsprechende Einrichtung des Ellipsometers zum Auffangen und Auswerten eines Ausgangsstrahls von der Probe reflektierten Lichtes ist ebenfalls seitlich des Spektralphotometer-Meßobjektives anzuordnen. Der Aufbau einer solchen Meßanordnung ist jedoch verhältnismäßig kompliziert.

In der US 5,042,951 ist eine Meßanordnung beschrieben, bei der mit nur einem Objektiv ellipsometrisch gemessen werden kann. Es können viele unterschiedliche Einfallswinkel gleichzeitig analysiert werden, wobei auch ein kleiner Meßspot von etwa 1 µm oder darunter genutzt werden kann. Jedoch ist es mit der dort beschriebenen Anordnung nicht möglich, gleichzeitig mehrere Wellenlängen separat und spektroskopisch zu analysieren.

In der US 5,596,406 wurden demgegenüber Verbesserungen vorgenommen; so wird dort unter anderem die gleichzeitige Messung von mehreren Wellenlängen unter Nutzung einer Halogenlampe als Beleuchtungsquelle empfohlen.

Sowohl die in US 5, 042,951 als auch in US 5.596.406 vorgeschlagene Anordnung verwendet jedoch durchgängig normale dispersive Linsenoptiken und Glasplatten-Strahlenteiler, die zwar für den VIS-IR Bereich, nicht jedoch den gesamten UV-VIS-IR Spektralbereich geeignet sind. Die Ursache liegt in dem großen Farbfehler der Objekt-Abbildung und der geringer werdenden Transmission bei Breitband-Antireflexions-Schichten und Breitband-ReflexionsSchichten im tiefen UV.

Der Erfindung liegt demgegenüber die Aufgabe zugrunde, eine nach dem Prinzip der Ellipsometrie arbeitende optische Meßanordnung zu schaffen, die bei einem einfachen, kompakten Aufbau über den gesamten UV-VIS-IR Spektralbereich eine hohe Meßgenauigkeit bis in den Subnanometerbereich erlaubt.

Diese Aufgabe wird durch eine optische Meßordnung gemäß Anspruch 1 gelöst.

Durch den Einsatz eines Spiegelobjektives für die Ellipsometrie können die bisher dazu verwendeten, separaten optischen Baugruppen entfallen. Überdies ist es möglich, das Spiegelobjektiv gleichzeitig für die Spektrographie zu verwenden, wodurch der apparative Aufwand der optischen Meßanordnung auf ein einziges Meßinstrument reduziert wird und eine besonders raumsparende Bauweise der gesamten Meßanordnung verwirklicht werden kann.

Das Spiegelobjektiv weist gegenüber herkömmlicherweise bei der Ellipsometrie verwendeten Optiken überdies den Vorteil der UV-Gängigkeit auf, so daß eine Messung mit Lichtwellenlängen im Spektralbereich von 190 nm bis 800 nm durchgeführt werden kann. Insbesondere bei der Messung von kleinen Schichtdicken resultiert aus der Messung mit kurzen Wellenlängen im UV-Bereich eine hohe Meßgenauigkeit.

Das Spiegelobjektiv erlaubt weiterhin die Aufbringung eines Einfallstrahles auf den Meßort an der Probe innerhalb eines Winkelbereiches von 18° bis 41° zur optischen Achse des Spiegelobjektivs. Die relativ hohe numerische Apertur des Objektives, d.h. dessen großer Einfallswinkelbereich, erlaubt das Messen sowohl dünner als auch dicker Schichten mit hoher Genauigkeit. Aufgrund der relativ hohen Apertur des Spiegelobjektivs sind Mikrospotgrößen von etwa 400 nm bis 2 µm möglich.

In einer vorteilhaften Ausgestaltung der Erfindung wird das von der Probe reflektierte Licht über eine Lichtleiteinrichtung in eine Auswerteeinrichtung eingeleitet, wobei die Lichtleiteinrichtung eine Vielzahl von einzelnen Lichtleitfasern umfaßt. Eine weitere Lichtleiteinrichtung mit einer Vielzahl von einzelnen Lichtleitfasern ist vorgesehen, um der Auswerteeinrichtung von der Probe unbeeinflußtes Meßlicht zuzuführen. Durch die Verwendung von Lichtleitfasern läßt sich die Auswerteeinrichtung sehr flexibel zu dem Spiegelobjektiv sowie einer notwendigerweise ebenfalls vorhandenen Beleuchtungsquelle anordnen. Eine Parallelschaltung der Lichtleiteinrichtungen erlaubt es, die Entstehung von Rauschsignalen bei der Auswertung zu vermindern, da das Meßsignal zwar verrauscht am Empfänger ankommt, dieses Rauschen allerdings mit dem Rauschen des Referenzlichtkanals korrelliert, so daß es sich gut kompensieren läßt.

Vorzugsweise ist dem Spiegelobjektiv ein polarisierender Strahlteiler nachgeschaltet, derart, daß der von dem Spiegelobjektiv kommende Ausfallstrahl in dem polarisierenden Strahlteiler in zwei s- und p-polarisierte Ausgangsstrahlen aufgespalten wird, die getrennt der Auswerteeinrichtung zugeführt werden. Damit ist es möglich, den Polarisationszustand des von der Probe reflektierten Lichtes zu analysieren. Der Strahlteiler kann dabei ein Analysator vom Typ Wollaston oder vom Typ Rochon sein. Gegenüber dem Rochonprisma besitzt das Wollastonprisma den Vorteil, daß der Trennwinkel zwischen den jeweils s- und p-polarisierten Ausgangsstrahlen größer ist.

Bevorzugt ist zwischen dem Ausgang des polarisierenden Strahlteilers und der zweikanalig ausgebildeten Lichtleiteinrichtung eine Fokussierlinse angeordnet, zur Fokussierung der aus dem polarisierenden Strahlteiler erhaltenen s- und p-polarisierten Ausgangslichtstrahlen auf die jeweiligen Eingänge der Kanäle der zweikanaligen Lichtleiteinrichtung. Die Eingänge können in einem den räumlichen Bedingungen angepaßten Abstand und in beliebiger Ausrichtung zu der Auswerteeinrichtung angeordnet werden. Zudem wird eine Anpassung an unterschiedliche Größen des Meßortes ermöglicht und dadurch eine hohe Lichtausbeute erzielt.

In einer alternativen Ausgestaltung wird das Spiegelobjektiv solchermaßen eingestellt, daß dieses im Unendlichen fokussiert, somit der von dem Spiegelobjektiv kommende Ausfallstrahl als fast paralleles Lichtbündel dem zwischen dem Spiegelobjektiv und der Auswerteeinrichtung angeordneten, polarisierenden Strahlteiler zugeführt wird. Durch eine dem polarisierenden Strahlteiler nachgeschaltete Linsenanordnung werden die weiterhin parallelen Lichtstrahlbündel der von dem polarisierenden Strahlteiler erhaltenen s- und p-polarisierten Ausgangslichtstrahlen in ihrer Strahlbreite vermindert, um die Einkopplung in die Eingänge der Meßlichtleiterkanäle zu ermöglichen.

In einer bevorzugten Ausgestaltung der Erfindung werden die einzelnen Lichtleitfasern der Lichtleiteinrichtungen bis zu einer Kopplungsvorrichtung an einem Eingang der Auswerteeinrichtung gebündelt geführt und dort aufgespreizt. Hierdurch läßt sich bei der nachfolgenden Analyse eine bessere Trennung der Signale aus den einzelnen Lichtleitfasern erzielen.

Die Anordnung der Enden der einzelnen Lichtleitfasern läßt sich je nach Bedarf zueinander gruppieren, beispielsweise indem die Lichtleitfasern von miteinander korrespondierenden Signalen unterschiedlicher Kanäle zusammengefaßt werden oder die Anordnung der Lichtleitfasern entsprechend den korrespondierenden Punkten an dem Meßort erfolgt. Bevorzugt werden die Lichtleitfasern nach Einfallswinkel geordnet.

Diese Gruppierungen können sowohl mechanisch durch Zusammenfassen der einzelnen Lichtleitfasern vorgenommen werden als auch durch eine nachfolgende Auswertung der willkürlich aufgespreizten Lichtleitfasern mittels einer Software, in welche die experimentell ermittelten Lagebeziehungen zwischen der Eingangsseite und der Ausgangsseite für jede Lichtleiteinrichtung individuell einprogrammiert sind.

In einer bevorzugten Ausgestaltung der Erfindung stehen jedoch für jede der Lichtleiteinrichtungen die eingangsseitigen Enden und die ausgangsseitigen Enden der Lichtleitfasern in gleicher Lagebeziehung zueinander, so daß zur Beurteilung des Meßergebnisses die erhaltenen Signale aus den unterschiedlichen Kanälen eine gleichartige Informationsstruktur besitzen und damit einfach miteinander verglichen werden können. Durch eine gezielte Anordnung eingangsseitig benachbarter Lichtleitfaserenden in benachbarter Formation an der Ausgangsseite können Signalbeeinflussungen zwischen nebeneinander verlaufenden Lichtleitfasern gering gehalten werden.

Vorzugsweise erfolgt die Aufspreizung der Lichtleitfasern der einzelnen Kanäle der Lichtleiteinrichtungen in Anpassung an die zur Untersuchung des Lichtes verwendete Auswerteeinrichtung, beispielsweise an einen Spektrographen mit einem spaltförmigen Eingang und einem CCD-Detektor zur Signalerfassung, insbesondere übersichtlich in Linienform.

In einer weiteren, bevorzugten Ausgestaltung sind die eingangsseitigen Enden der Lichtleitfasern für jeden Kanal der Lichtleiteinrichtungen über eine Fläche verteilt angeordnet, die einer Öffnung einer Aperturblende innerhalb eines von der Beleuchtungsquelle abgestrahlten Meßlichtstrahles entspricht, wobei die Aperturblende vor einem Strahlteiler zur Aufspaltung des Meßlichtstrahls in einen von der Probe zu beeinflussenden Anteil und einen von der Probe nicht zu beeinflussenden Anteil angeordnet ist. Damit läßt sich eine optimale Ausnutzung der Lichtleitfasern in den Lichtleiteinrichtungen sowie eine hohe Lichtausbeute erzielen.

Zur Optimierung des zur Messung verwendeten Lichtes ist eine Beleuchtungsvorrichtung mit einer Halogenlampe und einer Deuteriumlampe vorgesehen, wobei die Halogenlampe durch eine Öffnung der Deuteriumlampe hindurchscheint. Weiterhin ist zwischen der Beleuchtungseinrichtung und der Aperturblende eine Linsenanordnung vorgesehen, die die Wendel der Halogenlampe scharf in der Aperturblende abbildet. Damit ergibt sich ein homogenes Lichtquellvolumen mit einem breiten Spektralbereich von 190 nm bis 800 nm, der kontinuierlich zu Meßzwecken zur Verfügung steht.

Zur Festlegung der bei der Messung verwendeten Probenfeldgröße an dem Meßort ist zwischen dem Spiegelobjektiv und dem polarisierenden Strahlteiler ein Pinholespiegel vorgesehen, durch das der von dem Spiegelobjektiv kommende Ausfallstrahl geführt wird. Das Pinhole kann beispielsweise an einem teildurchlässigen Spiegel vorgesehen werden, über den ein Teil des Lichtes des Ausfallstrahls an eine CCD-Videokamera abgezweigt werden kann, um einen Meßprozeß zu überwachen und gegebenenfalls aufzuzeichnen.

In einer weiteren Ausgestaltung ist die erfindungsgemäße Meßanordnung mit einer Einrichtung zur Nivellierung ausgestattet, welche in der Lage ist, Richtungsabweichungen zwischen der Normalen auf die Probenoberfläche und der Winkelhalbierenden zwischen Ein- und Ausfallstrahl der Meßanordnung zu ermitteln und zu korrigieren. Die Wirkungsweise und der Aufbau derartiger Einrichtungen ist aus dem Stand der Technik bekannte und soll deshalb hier nicht näher erläutert werden.

Bei den zwei erwähnten alternativen Ausgestaltungen wird eine justierbare Viertelwellenplatte gängiger Art, die den gesamten UV-VIS-IR Spektralbereich durchläßt, entweder direkt nach dem Polarisator oder direkt vor dem polarisierenden Strahlteiler positioniert. Daraus ergibt sich vorteilhaft die Möglichkeit einer besseren Kontrolle über den Polarisationszustand des zu analysierenden Lichtes, so daß eine kürzere Meßzeit und eine höhere Meßgenauigkeit erreichbar sind.

Die weiteren Vorteile der erfindungsgemäßen Anordnung bestehen zusammengefaßt im wesentlichen darin, daß kurze Meßzeiten und somit ein hoher Durchsatz von beispielsweise Wafern während der Fertigungskontrolle erreicht werden können. Weiterhin wird eine Meßgenauigkeit bei Schichtdickenmessungen von 0.1 nm oder darunter erzielt. Ein wesentlicher Vorteil besteht darin, daß in einem großen Einfallswinkelbereich ein komplettes Spektrum im Bereich UV-VIS-IR gleichzeitig aufgenommen werden kann, wodurch eine hohe laterale Objekt-Auflösung von zwischen 400 nm und 2 µm möglich wird.

Der Einsatz des Spiegelobjektivs im Zusammenhang mit dem ellipsometrischen Meßverfahren gestattet es, Meßgenauigkeiten im Subnanometerbereich mit einem einfachen, kompakten Aufbau zu erreichen, wobei der Einfallstrahl durch das Spiegelobjektiv auf den Meßort an der Oberfläche der Probe gerichtet und der Ausfallstrahl ebenfalls durch das Spiegelobjektiv erfaßt wird. Auf diese Weise können für die spektroskopische Ellipsometrie die bisher im Stand der Technik verwendeten separaten optischen Baugruppen entfallen. Diese Anordnung mit Spiegelobjektiv kann neben den ellipsometrischen auch für spektroskopische Messungen verwendet werden, wodurch der apparative Aufwand reduziert wird und eine besonders raumsparende Bauweise der gesamten Anordnung verwirklicht werden kann.

Es ist mit dieser Anordnung möglich, für verschiedene Stepperwellenlängen wie 193 nm, 250 nm und 365 nm gleichzeitig die Reflexion zu ermitteln. Außerdem können optische Materialeigenschaften, wie zum Beispiel Brechungsindex n und Extinktionsfaktor k, in den sehr weiten UV-VIS-IR Spektralbereich zeiteffektiv gemessen werden.

Einen wesentlichen Beitrag zur Lösung der Aufgabe der Erfindung leistet dabei der beschriebene speziell geformte 4-armige Lichtleiter-Querschnittswandler.

Die Erfindung wird nachfolgend anhand eines in der Zeichnung dargestellten Ausführungsbeispieles näher erläutert. Die Zeichnung zeigt in:
- Fig.1: ein Ausführungsbeispiel einer optischen Meßanordnung zur Ellipsometrie, die hier zur Schichtdickenmessung eingesetzt wird,
- Fig.2: eine Detailansicht einer Aperturblende, die in der Meßanordnung nach Fig.1 verwendet wird,
- Fig.3: eine Detailansicht von in der Anordnung nach Fig.1 verwendeten Meß- und Referenzlichtleitern,
- Fig.4: eine Durchblicköffnung einer Deuteriumlampe mit der Wendel einer Halogenlampe einer Beleuchtungseinrichtung der Anordnung nach Fig.1,
- Fig.5: die Abbildung der Wendel der Halogenlampe in die Öffnung der Aperturblende,
- Fig.6: eine schematische Darstellung eines Ausfallstrahles von einem Meßort an einer Probe bis zur Einkopplung in einen Meßlichtleiter, wobei hier ein in Fig.1 zusätzlich dargestellter polarisierender Strahlteiler weggelassen ist,
- Fig.7: die Abbildung der Aperturöffnung auf einen runden Eingang eines Meßlichtleiterkanals,
- Fig.8: eine Detailansicht der Anordnung eines Pinholespiegels in dem Ausfallstrahl zwischen dem Spiegelobjektiv und dem polarisierenden Strahlteiler, und in
- Fig.9: eine Variante der Ausführungsform nach Fig.1, bei der der Ausfallstrahl als paralleles Lichtbündel in den polarisierenden Strahlteiler eingeleitet wird.

Das Ausführungsbeispiel zeigt eine optische Meßanordnung zur Schichtdickenmessung, die beispielsweise in einer kontinuierlichen Fertigungslinie zur Waferherstellung angeordnet werden kann, um die Oberflächen der Wafer zu kontrollieren.

Die Meßanordnung umfaßt zunächst eine Beleuchtungseinrichtung 1, in der ein für die Messung benötigter Meßlichtstrahl 6 erzeugt wird. Die Beleuchtungseinrichtung 1 umfaßt eine Halogenlampe 2, die beispielsweise mit gefüllt Krypton ist. Für eine besonders hohe Lichtausbeute wird jedoch eine Xenonfüllung bevorzugt. Weiterhin ist zwischen der Halogenlampe 2 und dem Ausgang des Meßlichtstrahls 6 aus der Beleuchtungseinrichtung 1 eine Deuteriumlampe 3 angeordnet, die als UV-VIS-Lichtquelle dient. Zur Vermeidung von größeren Lichtintensitätsfluktuationen weist die Deuteriumlampe 3 ein internes Deep-UV-Filter (DUV) auf, mit dem Licht unterhalb einer Wellenlänge von 190 nm ausgefiltert wird, um die Entstehung von Ozon zu vermeiden. Lampen, bei denen ein solches Filter fehlt, sind für Untersuchungen bei kurzen Wellen ungeeignet, da aufgrund der Lichtabsorption durch das Ozon im Lichtweg bei einer Wellenlänge um λ = 250 nm Intensitätsschwankungen auftreten, die sich als Lampenunruhe bei einer Messung störend bemerkbar machen.

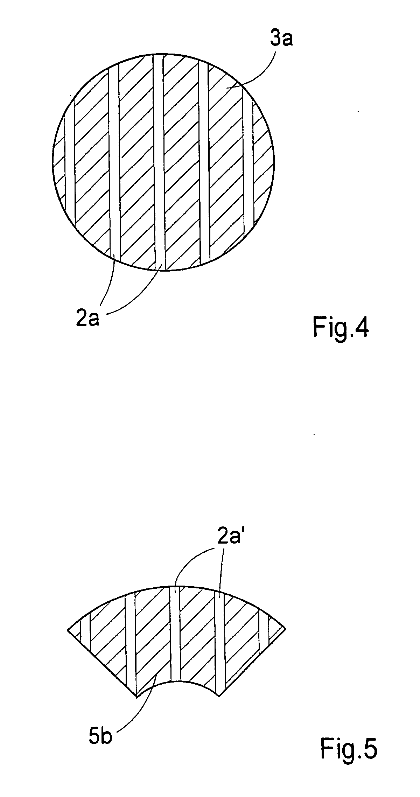

In dem Ausführungsbeispiel ist die Deuteriumlampe 3 mit einer Durchblicköffnung 3a versehen, die in Fig.4 dargestellt ist. Die Durchblicköffnung 3a wie auch die Vorderseite einer Wendel 2a der Halogenlampe 2 werden in der Ebene einer weiter unten noch genauer erläuterten Aperturblende 5 scharf abgebildet. Hierzu ist der Halogenlampe 2 und der Deuteriumlampe 3 in Richtung des Lichtaustrittes aus der Beleuchtungseinrichtung 1 eine geeignete Linsenanordnung 4 nachgeschaltet.

Bei Verwendung einer in der Zeichnung nicht dargestellten, herkömmlichen Deuteriumlampe ohne Durchblicköffnung 3a wird ein Klappspiegel vorgesehen, mit dem Licht abwechselnd von einer Deuteriumlampe oder von einer Halogenlampe zu der Aperturblende 5 gelenkt werden kann. Vorteilhaft wird dabei der D₂-rot-peak bei VIS-Messungen vermieden.

Durch die gemeinsame Verwendung einer Deuteriumlampe 3 mit Durchblicköffnung 3a zusammen mit einer Halogenlampe 2 kann hingegen stets ein Meßlicht in einem Wellenlängenbereich von 190 nm bis 800 nm zur Verfügung gestellt werden, womit sich eine besonders einfache Beleuchtungseinrichtung 1 verwirklichen läßt. Im Unterschied zu einer Klappspiegelanordnung, mit der abwechselnd entweder das Licht der Deuteriumlampe oder der Halogenlampe eingeblendet werden kann, entfällt bei dem dargestellten Ausführungsbeispiel der Umschaltvorgang des Klappspiegels, wodurch ein höherer Probendurchsatz an der Meßanordnung begünstigt wird. Prinzipiell ist es jedoch auch möglich, Licht aus zwei unterschiedlichen Quellen über geeignete, stationäre Spiegelanordnungen auf die Aperturblende 5 zu richten.

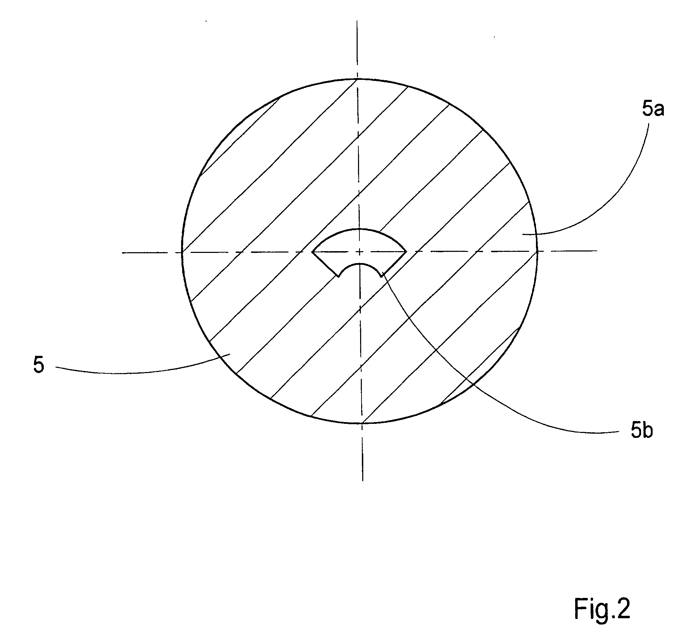

Die bereits erwähnte Aperturblende 5 ist in Fig.2 im Detail dargestellt. Diese umfaßt zunächst eine lichtundurchlässige Metallfolie 5a, in der eine lichtdurchlässige, insbesondere glasfreie Aperturöffnung 5b ausgebildet ist. Die Öffnung 5b besitzt hier die Form eines Viertelkreisringes und entspricht damit einer Viertelpupillenöffnung eines Meßobjektives.

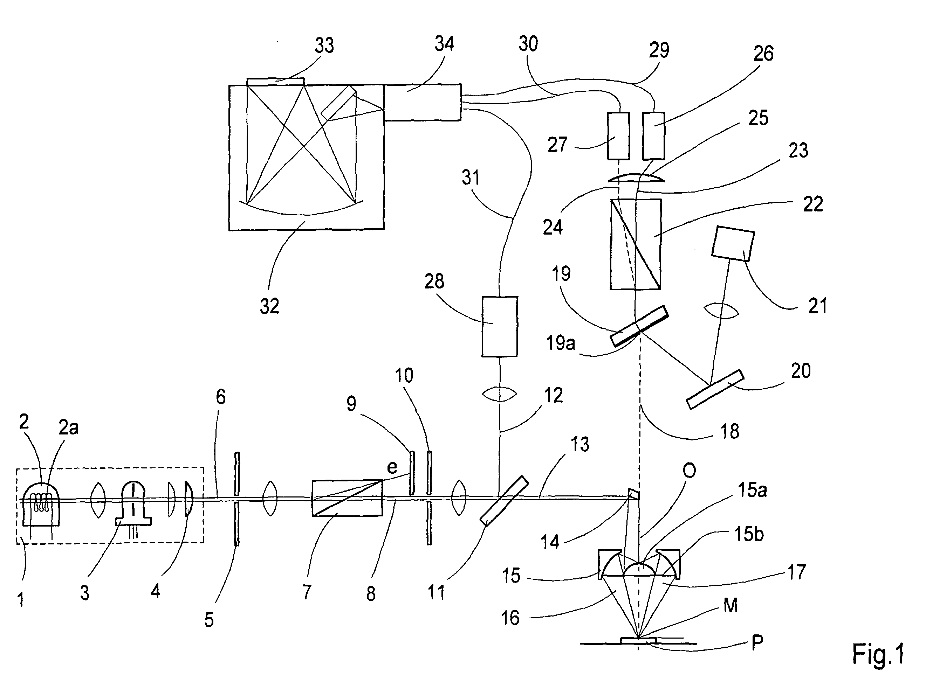

Der durch die Aperturblende 5 hindurchdringende Meßlichtstrahl 6 trifft auf einen Polarisator 7, der in den Bereichen UV, VIS und NIR durchlässig ist. Der Polarisator 7 ist bei dem in Fig.1 dargestellten Ausführungsbeispiel vom Typ Rochon, womit der eintreffende Meßlichtstrahl 6 in einen geradeauslaufenden, ordentlichen Strahl polarisierten Lichtes o und einen außerordentlichen, abgelenkten Strahl polarisierten Lichtes e aufgespalten wird. Letzterer wird durch eine dem Polarisator 7 nachgeschaltete Blende 9 abgeblockt. Der geradeauslaufende, polarisierte Strahl 8 durchläuft hingegen eine Feldblende 10 und trifft anschließend auf einen Strahlteiler 11 in Form eines teildurchlässigen Ablenkspiegels, mit dem das polarisierte Licht in einen Referenzlichtstrahl 12 und einen Objektlichtstrahl 13 aufgeteilt wird. Ersterer wird unmittelbar zu einer Auswerteeinrichtung 33 geleitet, wohingegen der Objektlichtstrahl 13 an einen Meßort M an der Oberfläche einer Probe P gelenkt und nach Beeinflussung durch die Probe der Auswerteeinrichtung 33 zugeführt wird.

Wie aus Fig.1 zu erkennen ist, wird der Objektlichtstrahl 13 über einen Halbspiegel 14 in die Eingangspupille eines Spiegelobjektives 15 eingeblendet und von dort als Einfallstrahl 16 in einem Winkelbereich α₁, α₂ zur Probenoberfläche von etwa 18° bis 41° auf den Meßort M gerichtet.

Für eine hohe Meßgenauigkeit ist es erforderlich, daß das Meßlicht auf dem Weg zu dem Meßort M nicht durch Kanten oder Stege beeinträchtigt wird. Andererseits muß ein in dem Spiegelobjektiv 15 vorgesehener Mittelspiegel 15a an einem Gehäuse des Spiegelobjektives 15 befestigt werden. Dies erfolgt bevorzugt durch stegartige Halterungen, wobei hier insgesamt vier Stege 15b vorgesehen sind, die sich jeweils zwischen einem Primärspiegel und dem Sekundärspiegel des Spiegelobjektives 15 erstrecken. Die Öffnung 5b der Aperturblende 5 ist dabei solchermaßen gewählt und angeordnet, daß der Objektlichtstrahl 13 zwischen zwei benachbarten Stegen 15b des Spiegelobjektes 15 unbeeinflußt hindurchgeleitet wird. Bei einer anderen Anzahl von Stegen 15b ist die Form der Öffnung 5b der Aperturblende 5 entsprechend anzupassen, um Beeinträchtigungen des Objektlichtstrahles 13 durch die Stege 15b zu vermeiden.

Der Objektlichtstrahl 13 als linear polarisierter Einfallsstrahl 16 wird an der Oberfläche der Probe P reflektiert, wobei die Wellenamplitude sowie die Phase der Polarisationskomponenten des Lichtes parallel und senkrecht zur Einfallsebene für unterschiedliche Einfallswinkel unterschiedlich geändert werden. Aus diesen Veränderungen lassen sich rechnerisch Rückschlüsse auf die Oberflächenstruktur, die Schichtdicken und/oder die optischen Materialeigenschaften an dem Meßort M ziehen. Hierzu wird der reflektierte Objektlichtstrahl 13 als Ausgangsstrahl 17 von dem Spiegelobjektiv 15 aufgefangen und von diesem als zu untersuchender Ausgangsstrahl 18 über weitere optische Baugruppen einer Auswerteeinrichtung 33 zugeführt.

Durch die Viertelpupillenteilung in dem Spiegelobjektiv 15 wird für die Ellipsometrie insgesamt lediglich die Hälfte einer Pupillenöffnung benötigt. Die verbleibenden Abschnitte können beispielsweise für eine in der Zeichnung nicht dargestellte Autofokus-Optik verwendet werden, mittels der der Abstand der Probe P zu dem Spiegelobjektiv 15 eingestellt wird.

Der aus dem Spiegelobjektiv 15 rückseitig austretende und zu untersuchende Ausfallstrahl 18 erreicht nach Durchtritt durch einen Pinholespiegel 19 einen polarisierenden Strahlteiler 22, in der Fachwelt meist auch als Analysator bezeichnet. Durch die Größe des Pinholes 19a wird die während der Messung verwendete Probenfeldgröße festgelegt. Der Pinholespiegel 19 ist dabei teildurchlässig ausgebildet, so daß an dieser Stelle ein Anteil des aus dem Spiegelobjektiv 15 kommenden Ausfallstrahls 18 nach Umlenkung durch eine weitere Spiegelanordnung 20 einer Untersuchungs- oder Beobachtungseinrichtung zugeführt oder mittels einer CCD-Videokamera 21 aufgezeichnet werden kann.

Der polarisierende Strahlteiler 22 ist in dem dargestellten Ausführungsbeispiel vom Typ Wollaston. Mit diesem wird der Ausfallstrahl 18 in zwei Ausgangslichtstrahlen 23 und 24 aufgespalten, wovon einer s-polarisiert ist und der andere p-polarisiert ist. Im Gegensatz zu einem hier ebenfalls verwendbaren Rochonprisma ergibt sich mit dem dargestellten Wollastonprisma ein größerer Trennwinkel zwischen den unterschiedlich polarisierten Ausgangslichtstrahlen 23 und 24.

Durch eine dem polarisierenden Strahlteiler 22 nachgeschaltete Sammellinse 25 werden die beiden Ausgangslichtstrahlen 23 und 24 mit der durch die Aperturblende 5 vorgegebenen Pupillenform jeweils auf einen Eingang 26 und 27 einer zweikanaligen Lichtleiteinrichtung für das reflektierte Objektlicht fokussiert. Jeder Meßlichtleiter 29 bzw. 30 umfaßt ein Bündel von einzelnen Lichtleitfasern 26b bzw. 27b, die zu einer optischen Koppeleinrichtung 34 verlaufen, welche vor dem Eingang einer Auswerteeinrichtung 33 angeordnet ist.

Für den Referenzlichtstrahl 12 ist ebenfalls ein Referenzlichtleiter 31 mit einer Vielzahl von Lichtleitfasern 28b vorgesehen, der zu der Koppeleinrichtung 34 verläuft.

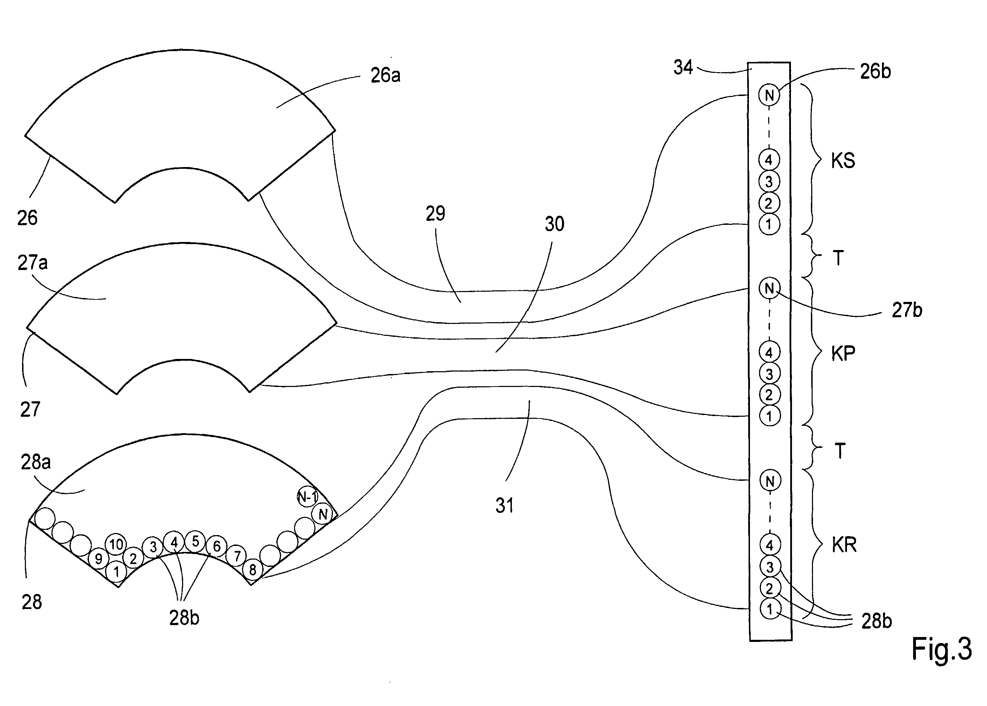

Eine bevorzugte Ausgestaltung der beiden Meßlichtleiter 29 bzw. 30 und des Referenzlichtleiters 31 ist in Fig.3 dargestellt. Die Eingänge 26, 27 und 28 der einzelnen Kanäle KS, KP und KR weisen dabei jeweils eine Querschnittsform 26a, 27a bzw. 28a auf, deren einhüllende Begrenzung im wesentlichen einer Abbildung der Kontur der Aperturöffnung 5b entspricht.

Die Anordnung der einzelnen Lichtleitfasern 26b, 27b und 28b ist anhand des Kanals KR des Referenzlichtleiters 31 beispielhaft dargestellt. Wie aus Fig.3 zu erkennen ist, wird am Kanaleingang 28 die Viertelpupillenform der Aperturblende 5 auf die Querschnittsfläche der Enden des Bündels der Lichtleitfasern 28b abgebildet. Somit besteht bei einer Messung ein eindeutiger Zusammenhang zwischen einer einzelnen Lichtleitfaser und einem bestimmten Einfallswinkel und Ausfallswinkel an einem Meßort M. Die Ausgangsenden der einzelnen Kanäle KS, KP und KR sind jeweils im Hinblick auf die Verwendung eines CCD-Detektors als Auswerteeinrichtung 33 an der Koppeleinrichtung 34 linienförmig aufgespreizt. Die Anordnung der einzelnen Lichtleitfasern 26b bis 28b werden dabei derart gruppiert, daß die Lichtleitfasern einem stetig steigenden oder einem stetig sinkenden Einfallswinkel an der Probe P entsprechen. Dies hat den Vorteil, daß die Intensitätsschwankungen unter benachbarten Lichtleitfasern eines Kanals geringer als bei einer zufälligen Anordnung ausfallen, wodurch Übersprecheffekte zwischen den benachbarten Lichtleitfasern gering bleiben. Die Gruppierung erfolgt dabei für alle Kanäle KS, KP und KR in der gleichen Art und Weise.

Selbstverständlich können die Lichtleitfaserenden an der Koppeleinrichtung 34 auch nach einer anderen Anordnungsvorschrift in definierter Art und Weise zueinander angeordnet werden. So können beispielsweise die zu einem gleichen Einfallswinkel gehörigen Lichtleitfasern unterschiedlicher Kanäle KS, KP und KR in Gruppen zusammengefaßt werden.

Zur Unterscheidung zwischen den einzelnen Kanälen KS, KP und KR an der Auswerteeinrichtung 33 ist zwischen diesen jeweils ein Trennabstand T vorgesehen. Die einzelnen Kanäle KS, KP und KR sind durch einen Abstand T von beispielsweise 0,4 mm bis 1 mm voneinander getrennt, wobei die Gesamtlänge der hintereinander aufgereihten Kanäle beispielsweise 6 mm beträgt.

Die Übertragung der Ausgangssignale der Koppeleinrichtung 34 an den CCD-Detektor der Auswerteeinrichtung 33 erfolgt über einen Spektrographen 32. In dem dargestellten Ausführungsbeispiel wird ein abbildender Spiegel-Gitter-Spektrograph mit einem zweidimensionalen CCD-Detektor eingesetzt. Dieser CCD-Detektor ist im Wellenlängenbereich von 190 nm bis 800 nm empfindlich. Durch die Verwendung eines rückseitig beleuchteten, UV-empfindlichen und gekühlten CCD-Detektors mit niedrigem Dunkelstrom ist ein schnelles Auslesen der Meßspektren innerhalb von einer Sekunde möglich.

Mit der beschriebenen optischen Meßanordnung können sowohl ellipsometrische als auch spektroskopische Untersuchungen mittels des gleichen Spiegelobjektives 15 vorgenommen werden. Somit ergibt sich ein einfacher und kompakter Aufbau der Meßanordnung, bei der aufgrund der Doppelverwendbarkeit des Spiegelobjektives im übrigen auch der Justieraufwand gering bleibt.

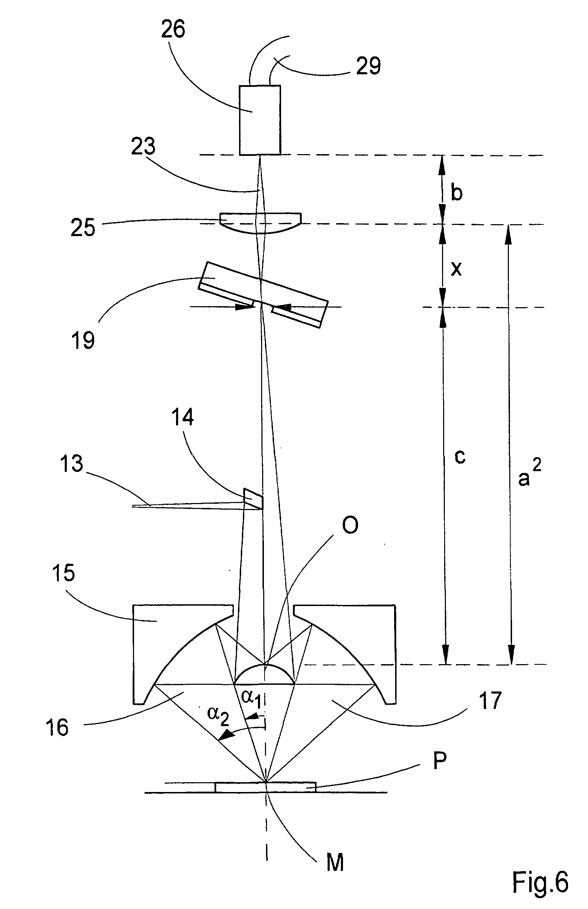

Im Folgenden soll nun auf einige Details der Abbildung des Ausfallstahls 18 auf den Eingang 26 und 27 der Meßlichtleiter 29 und 30 näher eingegangen werden. Die hierfür relevanten Baugruppen sind in Fig.6 dargestellt, wobei der polarisierende Strahlteiler 22 weggelassen ist.

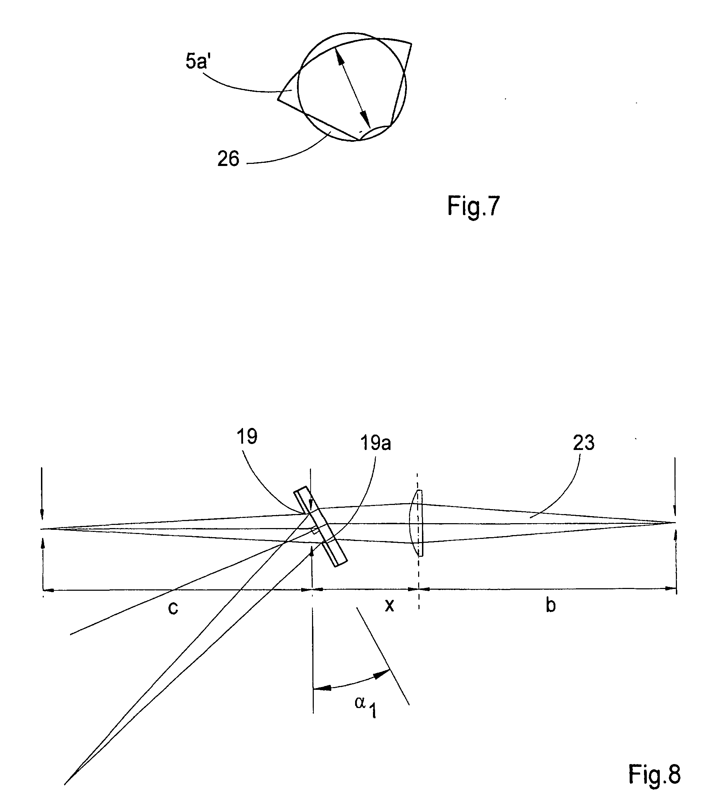

Das in Fig.6 dargestellte Spiegelobjektiv 15 weist eine 74-fache Vergrößerung bei einer numerischen Apertur von 0,65 auf. Bei einem Abstand a = 200,5 mm zwischen der Eingangspupille des Spiegelobjektives 15 und der Sammellinse 25 sowie einem Abstand von b = 107,5 mm zwischen der Sammellinse 25 und dem Eingang 26 des Meßlichtleiters 29 ergibt sich bei einer Sammellinse 25 mit einer Fokallänge von f = 70 mm eine Verkleinerung der Eingangspupille des Spiegelobjektives 15 um den Faktor 0,54. Der Abstand zwischen der Sammellinse 25 und dem Pinholespiegel 19 beträgt dabei 20 mm. Damit kann eine Pupille mit einem Außendurchmesser von 3,35 mm und einem Innendurchmesser von 1,5 mm auf eine Radialbreite Δr von etwa 0,5 mm abgebildet werden, wie dies in Fig.7 dargestellt ist. Dort erfolgt die Fokussierung der Viertelpupille 5a' auf den Eingang 26 des Meßlichtleiters 29 mit einer kreisförmigen Anordnung der Lichtleitfaserbündel, wobei der Eingang 26 einen Durchmesser von etwa 0,5 mm aufweist. Die einzelnen Lichtleitfasern besitzen einen Kerndurchmesser von etwa 50 µm bis 150 µm. Beispielsweise können Lichtleitfasern mit einem Kerndurchmesser von 80 µm verwendet werden, so daß sich etwa zehn Lichtleitfasern entlang des Innenrandes der Pupille ergeben.

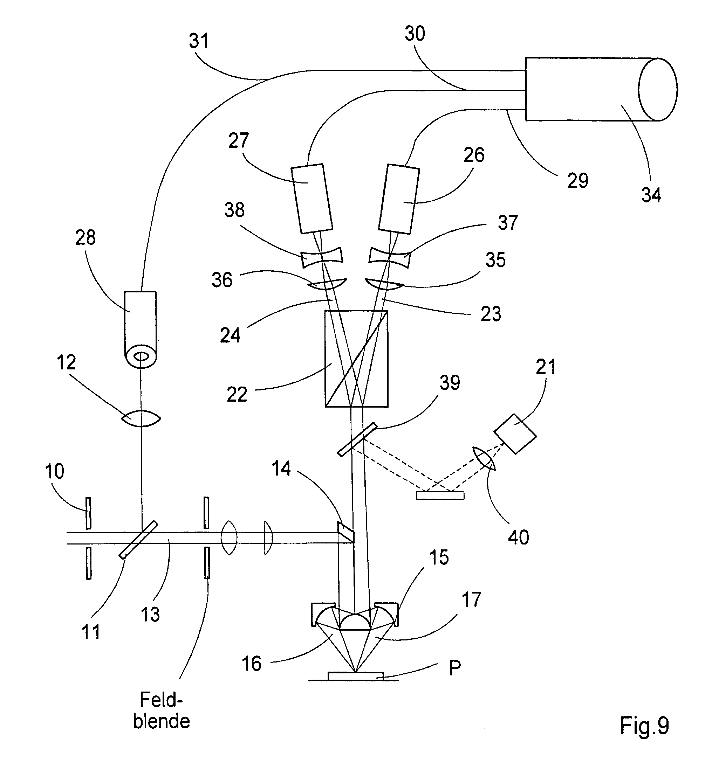

Eine alternative Ausgestaltung ist in Fig.9 dargestellt, um die hohe Apertur des Spiegelobjektives 15 für einen Mikrospot an einem Meßort M mit einer lateralen Auflösung etwa zwischen 400 nm und 2 µm nutzen zu können. Hierzu sind der Primär- und Sekundärspiegel des Spiegelobjektives 15 solchermaßen eingestellt, daß dieses im Unendlichen fokussiert. Der polarisierende Strahlteiler 22 steht somit in einem fast parallelen Lichtstrahlbündel des Ausfallstrahls 18, was vorteilhaft ist für den Strahlengang durch den polarisierenden Strahlteiler 22.

Zwischen dem polarisierenden Strahlteiler 22 und den Meßlichtleitern 29, 30 kann eine Linsenanordnung 35, 36, 37, 38 angeordnet werden, die der Verminderung der Strahlbreite der weiterhin parallelen Lichtstrahlbündel der von dem polarisierenden Strahlteiler 22 erhaltenen s- und p-polarisierten Ausgangslichtstrahlen 23, 24 dient. Um die Ausgangsstrahlen 23 und 24 des polarisierenden Strahlteilers 22 auf eine für die Eingänge 26 und 27 der Kanäle KS und KP der Meßlichtleiter 29 und 30 geeignete Weite zu verringern, wird zwischen dem polarisierenden Strahlteiler 22 und den Eingängen 26 und 27 jeweils eine plankonvexe Linse 35 bzw. 36 und jeweils eine plankonkave Linse 37 bzw. 38 ähnlich einer umgekehrten Laserstrahlerweiterung hintereinander angeordnet. Um den von dem Spiegelobjektiv 15 kommenden Ausfallstrahl 18 mittels einer Videokamera 21 zu erfassen, wird bei dieser Variante ein Klappspiegel 39 sowie eine weitere Linsenoptik 40 vorgesehen.

### Bezugszeichenliste

- 1: Beleuchtungseinrichtung
- 2: Halogenlampe
- 2a: Wendel
- 3: Deuteriumlampe
- 3a: Durchblicköffnung
- 4: Linsenanordnung
- 5: Aperturblende
- 5a: Metallfolie
- 5b: Aperturöffnung
- 6: Meßlichtstrahl
- 7: Polarisator
- 8: polarisierter Strahl
- 9: nachgeschaltete Blende
- 10: Feldblende
- 11: Strahlteiler
- 12: Referenzlichtstrahl
- 13: Objektlichtstrahl
- 14: Spiegel
- 15: Spiegelobjektiv
- 15a: Mittelspiegel
- 15b: Stege
- 16: Einfallstrahl
- 17: Ausgangsstrahl
- 18: Ausgangsstrahl
- 19: Pinholespiegel
- 19a: Pinhole
- 20: Spiegelanordnung
- 21: Videokamera
- 22: polarisierender Strahlteiler
- 23,24: Ausgangslichtstrahlen
- 25: Sammellinse
- 26,27,28: Eingang
- 26b,27b,28b: Lichtleitfaser
- 29,30: Meßlichtleiter
- 31: Referenzlichtleiter
- 32: Spektrograph
- 33: Auswerteeinrichtung
- 34: Koppeleinrichtung
- 35,36: plankonvexe Linse
- 37,38: plankonkave Linse

- T: Trennabstand
- P: Probe
- M: Meßort
- KS,KP,KR: Kanäle

## Patentansprüche

1. Optische Meßanordnung mit einem Ellipsometer, wobei das Ellipsometer Mittel zur Erzeugung polarisierten Lichtes aufweist, sowie ein Objektivmittels dessen ein Einfallstrahl (16) polarisierten Lichtes unter einem Einfallswinkel von α ≠ 0° relativ zur optischen Achse des Objektivs auf einen Meßort (M) an der Oberfläche einer Probe (P) richtbar ist und aus der Analyse eines von der Probe (P) reflektierten Ausfallstrahls (17) Informationen über Eigenschaften der Probe (P), bevorzugt über Schichtdicken sowie optische Materialeigenschaften, gewonnen werden können wobei der Einfallstrahl (16) durch ein Spiegelobjektiv (15) auf die Oberfläche der Probe (P) richtbar ist **dadurch gekennzeichnet daß** der Ausfallstrahl (17) ebenfalls durch das selbe Spiegelobjektiv (15) erfaßbar ist.

2. Optische Meßanordnung nach Anspruch 1, **dadurch gekennzeichnet, daß** zur Einkopplung des von der Probe (P) reflektierten Lichtes in eine Auswerteeinrichtung (33) Meßlichtleiter (29, 30) vorgesehen sind, die eine Vielzahl von Lichtleitfasern umfassen, und daß ein Referenzlichtleiter (31) vorgesehen ist, über den der Auswerteeinrichtung (33) von der Probe (P) unbeeinflußtes Meßlicht zugeführt werden kann.

3. Optische Meßanordnung nach Anspruch 1 oder 2, **dadurch gekennzeichnet, daß** dem Spiegelobjektiv (15) ein polarisierender Strahlteiler (22) nachgeschaltet ist, derart, daß der von dem Spiegelobjektiv (15) kommende Ausfallstrahl (18) nach Durchlaufen des Strahlteilers (22) in zwei s- und p-polarisierte Ausgangsstrahlen (23, 24) aufgespalten wird, die getrennt einer Auswerteeinrichtung (33) zugeführt werden können.

4. Optische Meßanordnung nach Anspruch 3, **dadurch gekennzeichnet, daß** zwischen dem polarisierenden Strahlteiler (22) und den zweikanalig ausgebildeten Meßlichtleitern (29, 30) eine Fokussierlinse (25) angeordnet ist, zur Fokussierung der aus dem polarisierenden Strahlteiler (22) erhaltenen s- und p-polarisierten Ausgangslichtstrahlen (23, 24) auf die jeweiligen Eingänge (26, 27) der Meßlichtleiter (29, 30).

5. Optische Meßanordnung nach Anspruch 3, **dadurch gekennzeichnet, daß** das Spiegelobjektiv (15) auf unendlich fokussiert ist, derart daß der von dem Spiegelobjektiv (15) kommende Ausfallstrahl (18) als paralleles Strahlenbündel auf den zwischen dem Spiegelobjektiv (15) und der Auswerteeinrichtung (33) angeordneten, polarisierenden Strahlteiler (22) auftrifft.

6. Optische Meßanordnung nach einem der Ansprüche 2 bis 5, **dadurch gekennzeichnet, daß** die einzelnen Lichtleitfasern (26b, 27b, 28b) der Meßlichtleiter (29, 30) und des Referenzlichtleiters (31) bis zu einer Kopplungseinrichtung (34) an einem Eingang der Auswerteeinrichtung (33) gebündelt geführt und an der Kopplungseinrichtung (34) aufgespreizt sind.

7. Optische Meßordnung nach Anspruch 6, **dadurch gekennzeichnet, daß** die einzelnen Lichtleitfasern (26b, 27b, 28b) der Kanäle (KP, KS) der Meßlichtleiter (29, 30) für von der Probe (P) reflektiertes Licht und den Kanal (KR) des Referenzlichtleiters (31) für von der Probe (P) unbeeinflußtes Licht jeweils in linienartiger Anordnung aufgespreizt sind.

8. Optische Meßanordnung nach Anspruch 6 oder 7, **dadurch gekennzeichnet, daß** für die Meßlichtleiter (29, 30) und den Referenzlichtleiter (31) die eingangsseitigen Enden und die ausgangsseitigen Enden der Lichtleitfasern (26b, 27b, 28b) in gleicher Lagebeziehung zueinander stehen.

9. Optische Meßanordnung nach einem der Ansprüche 2 bis 8, **dadurch gekennzeichnet, daß** die eingangsseitigen Enden der Lichtleitfasern (26b, 27b, 28b) für jeden Kanal der Meßlichtleiter (29, 30) und des Referenzlichtleiters (31) über eine Fläche (26a, 27a, 28a) verteilt angeordnet sind, die der Form einer Öffnung (5b) einer Aperturblende (5) innerhalb eines von einer Beleuchtungsvorrichtung (1) abgestrahlten Meßlichtstrahls (6) nachgebildet ist, wobei die Aperturblende (5) vor einem Strahlteiler (11) zur Aufspaltung des Meßlichtstrahls (6) in einen von der Probe (P) zu beeinflussenden Anteil und einen von der Probe nicht zu beeinflussenden Anteil angeordnet ist.

10. Optische Meßanordnung nach Anspruch 9, **dadurch gekennzeichnet, daß** die Beleuchtungsvorrichtung (1) eine Halogenlampe (2) und eine Deuteriumlampe (3) aufweist, wobei eine Wendel (2a) der Halogenlampe (2) durch eine Durchblicköffnung (3a) der Deuteriumlampe (3) hindurchscheint, und daß eine Linsenanordnung (4) vorgesehen ist, über welche die Wendel (2a) der Halogenlampe (2) in die Öffnung (5b) der Aperturblende (5) scharf abgebildet wird.

## Claims

1. Optical measuring arrangement having an ellipsometer, the ellipsometer having means for the purpose of producing polarized light, and an objective by means of which an incident beam (16) of polarized light can be directed at a measuring location (M) on the surface of a probe (P) at an angle of incidence of α ≠ 0° in relation to the optical axis of the objective, and information on properties of the probe (P), preferably on layer thicknesses and optical material properties, can be obtained from the analysis of an exit beam (17) reflected by the probe (P), it being possible for the incident beam (16) to be directed by a mirror objective (15) onto the surface of the probe (P), **characterized in that** the exit beam (17) can likewise be detected by the same mirror objective (15).

2. Optical measuring arrangement according to Claim 1, **characterized in that** measuring optical waveguides (29, 30), which comprise a large number of optical fibres, are provided for the purpose of injecting the light reflected by the probe (P) into an evaluation device (33), and **in that** a reference optical waveguide (31) is provided by means of which the evaluation device (33) can be fed measured light which is uninfluenced by the probe (P).

3. Optical measuring arrangement according to Claim 1 or 2, **characterized in that** a polarizing beam splitter (22) is connected downstream of the mirror objective (15) such that the exit beam (18) coming from the mirror objective (15) is split into two s- and p-polarized output beams (23, 24) once it has passed through the beam splitter (22), and these two output beams (23, 24) can be fed separately to an evaluation device (33).

4. Optical measuring arrangement according to Claim 3, **characterized in that** a focusing lens (25) is arranged between the polarizing beam splitter (22) and the two-channel measuring optical waveguides (29, 30) for the purpose of focusing the s- and p-polarized output light beams (23, 24), which are obtained from the polarizing beam splitter (22), onto the respective inputs (26, 27) of the measuring optical waveguides (29, 30).

5. Optical measuring arrangement according to Claim 3, **characterized in that** the mirror objective (15) is infinitely focused such that the exit beam (18) coming from the mirror objective (15) is incident on the polarizing beam splitter (22) which is arranged between the mirror objective (15) and the evaluation device (33) in the form of a parallel beam bundle.

6. Optical measuring arrangement according to one of Claims 2 to 5, **characterized in that** the individual optical fibres (26b, 27b, 28b) of the measuring optical waveguides (29, 30) and the reference optical waveguide (31) lead up to a coupling device (34) at an input of the evaluation device (33) as a bundle and are spread apart at the coupling device (34).

7. Optical measuring arrangement according to Claim 6, **characterized in that** the individual optical fibres (26b, 27b, 28b) of the channels (KP, KS) of the measuring optical waveguides (29, 30) for light reflected by the probe (P) and the channel (KR) of the reference optical waveguide (31) for light which is uninfluenced by the probe (P) are in each case spread apart in a linear arrangement.

8. Optical measuring arrangement according to Claim 6 or 7, **characterized in that** the input-side ends and the output-side ends of the optical fibres (26b, 27b, 28b) are in the same positional relationship with respect to one another for the measuring optical waveguides (29, 30) and the reference optical waveguide (31).

9. Optical measuring arrangement according to one of Claims 2 to 8, **characterized in that** the input-side ends of the optical fibres (26b, 27b, 28b) for each channel of the measuring optical waveguides (29, 30) and the reference optical waveguide (31) are arranged such that they are distributed over a surface (26a, 27a, 28a) which reproduces the shape of an opening (5b) in an aperture diaphragm (5) within a measurement light beam (6) emitted by an illumination device (1), the aperture diaphragm (5) being arranged upstream of a beam splitter (11) for the purpose of splitting the measurement light beam (6) into a component which is to be influenced by the probe (P) and a component which is not to be influenced by the probe.

10. Optical measuring arrangement according to Claim 9, **characterized in that** the illumination device (1) has a halogen lamp (2) and a deuterium lamp (3), a filament (2a) of the halogen lamp (2) shining through a passage opening (3a) in the deuterium lamp (3), and **in that** a lens arrangement (4) is provided by means of which the filament (2a) of the halogen lamp (2) is sharply imaged in the opening (5b) of the aperture diaphragm (5).

## Revendications

1. Arrangement de mesure optique comprenant un ellipsomètre, l'ellipsomètre présentant des moyens pour générer de la lumière polarisée ainsi qu'un moyen objectif dont la lumière polarisée sous la forme d'un rayon incident (16) peut être dirigée sous un angle d'incidence α ≠ 0° par rapport à l'axe optique de l'objectif sur un point de mesure (M) sur la surface d'un échantillon (P) et des informations sur les propriétés de l'échantillon (P), de préférence sur des épaisseurs de couche ainsi que des propriétés optiques du matériau peuvent être obtenues à partir de l'analyse d'un rayon sortant (17) réfléchi par l'échantillon (P), le rayon incident (16) pouvant être dirigé sur la surface de l'échantillon (P) par un objectif à miroir (15), **caractérisé en ce que** le rayon sortant (17) peut lui aussi être détecté par le même objectif à miroir (15).

2. Arrangement de mesure optique selon la revendication 1, **caractérisé en ce que** pour injecter la lumière réfléchie par l'échantillon (P) dans un dispositif d'évaluation (33) sont prévues des fibres optiques de mesure (29, 30) qui regroupent un grand nombre de fibres optiques et qu'il est prévu une fibre optique de référence (31) par le biais de laquelle la lumière mesurée non influencée par l'échantillon (P) peut être acheminée au dispositif d'évaluation.

3. Arrangement de mesure optique selon la revendication 1 ou 2, **caractérisé en ce que** l'objectif à miroir (15) est suivi par un diviseur de rayons polarisant (22) de telle sorte que le rayon sortant (18) en provenance de l'objectif à miroir (15), après être passé à travers le diviseur de rayons (22), est décomposé en deux rayons de sortie (23, 24) polarisés s et p, lesquelles peuvent être acheminés séparément à un dispositif d'évaluation (33).

4. Arrangement de mesure optique selon la revendication 3, **caractérisé en ce qu'**entre le diviseur de rayons polarisant (22) et les fibres optiques de mesure (29, 30) à deux canaux est disposée une lentille de concentration (25) pour concentrer les rayons de lumière de sortie (23, 24) à polarisation s et p obtenus du diviseur de rayons polarisant (22) sur les entrées (26, 27) correspondantes des fibres optiques de mesure (29, 30).

5. Arrangement de mesure optique selon la revendication 3, **caractérisé en ce que** l'objectif à miroir (15) est mis au point sur l'infini de telle sorte que le rayon sortant (18) en provenance de l'objectif à miroir (15) vient rencontrer le diviseur de rayons polarisant (22), disposé entre l'objectif à miroir (15) et le dispositif d'évaluation (33), sous la forme d'un faisceau de rayons parallèles.

6. Arrangement de mesure optique selon l'une des revendications 2 à 5, **caractérisé en ce que** les fibres optiques individuelles (26b, 27b, 28b) des fibres optiques de mesure (29, 30) et de la fibre optique de référence (31) sont acheminées en toron jusqu'à un dispositif de couplage (34) à une entrée du dispositif d'évaluation (33) et sont étalées au niveau du dispositif de couplage (34).

7. Arrangement de mesure optique selon la revendication 6, **caractérisé en ce que** les fibres optiques individuelles (26b, 27b, 28b) des canaux (KP, KS) des fibres optiques de mesure (29, 30) pour la lumière réfléchie par l'échantillon (P) et le canal (KR) de la fibre optique de référence (31) pour la lumière non influencée par l'échantillon (P) sont à chaque fois étalées selon un arrangement linéaire.

8. Arrangement de mesure optique selon la revendication 6 ou 7, **caractérisé en ce que** pour les fibres optiques de mesure (29, 30) et la fibre optique de référence (31), les extrémités côté entrée et les extrémités côté sortie des fibres optiques (26b, 27b, 28b) se trouvent dans la même relation de position entre elles.

9. Arrangement de mesure optique selon l'une des revendications 2 à 8, **caractérisé en ce que** les extrémités côté entrée des fibres optiques (26b, 27b, 28b) pour chaque canal des fibres optiques de mesure (29, 30) et de la fibre optique de référence (31) sont réparties sur une surface (26a, 27a, 28a) qui est réalisée sous la forme d'une ouverture (5b) d'un diaphragme (5) à l'intérieur d'un rayon de lumière de mesure (6) émis par un dispositif d'éclairage (1), le diaphragme (5) étant disposé devant un diviseur de rayons (11) pour décomposer le rayon de lumière de mesure (6) en une partie destinée à être influencée par l'échantillon (P) et une partie non destinée à être influencée par l'échantillon.

10. Arrangement de mesure optique selon la revendication 9, **caractérisé en ce que** le dispositif d'éclairage (1) présente une lampe halogène (2) et une lampe au deutérium (3), un filament (2a) de la lampe halogène (2) apparaissant à travers une ouverture d'observation (3a) de la lampe au deutérium (3) et qu'il est prévu un arrangement de lentilles (4) par le biais duquel le filament (2a) de la lampe halogène (2) est représenté de manière nette dans l'ouverture (5b) du diaphragme (5).
